# FASCICULE DE BREVET EUROPEEN

(11) **EP 1 750 012 B1**
(45) Date de publication et mention de la délivrance du brevet: **08.10.2014**
(21) Numéro de dépôt: 06118286.1
(22) Date de dépôt: 02.08.2006
(51) Int. Cl.: F04D 27/02

(54) **Compresseur à prélèvement d'air centripède**
Verdichter mit zentripetaler Abblasvorrichtung
Compressor with centripetal air bleed device

(30) Priorité: 03.08.2005 FR 0508279
(43) Date de publication de la demande: 07.02.2007
(73) Titulaire: SNECMA, 75015 Paris (FR)
(72) Inventeur: BOUILLER, Philippe, 77210, SAMOREAU (FR); CHARIER, Gilles, 77130, LA GRANDE PAROISSE (FR); ESCURE, Didier, 77176, NANDY (FR); ROUSSELIN, Stéphane, 77850, HERICY (FR)
(74) Mandataire: Intès, Didier Gérard André

(56) Documents cités:
- US-A- 3 398 881
- US-A- 4 576 547
- US-A- 5 267 832
- US-A1- 2002 182 059

## Description

L'invention se rapporte à un compresseur à prélèvement d'air centripète, notamment pour un turboréacteur d'avion. Elle concerne plus particulièrement un nouvel agencement, plus simple, des tubes de prélèvement, d'orientation radiale, permettant de prélever de l'air dans la veine d'air du compresseur, pour le faire cheminer entre les alésages des disques du rotor et l'arbre.

Dans un turboréacteur d'avion, il est nécessaire, pour les besoins du moteur (refroidissement de certains éléments et pressurisation des enceintes de lubrification) de faire des prélèvements d'air au niveau du compresseur haute pression.

Selon une technique connue, l'air est prélevé via des orifices dans la paroi du rotor délimitant l'intérieur de la veine et est acheminé via des tubes de prélèvement centripète pour le faire circuler le long de l'arbre traversant le rotor.

Cette solution a l'avantage de diminuer l'encombrement à la périphérie du compresseur et de récupérer de l'air à la pression souhaitée en jouant sur la longueur des tubes et le rayon de prélèvement.

Par exemple, le brevet américain n° 6 648 592 décrit un agencement de ce type où les tubes sont enfilés sur un anneau qui est boulonné sur l'un des disques du compresseur haute pression. Un inconvénient de ce montage est que le nombre de pièces est relativement important. Une autre solution consiste à sertir les tubes à une virole extérieure tout en les retenant intérieurement en les rattachant à une virole intérieure solidaire de l'un des disques du compresseur. L'inconvénient de ce système est la difficulté de montage.

Le brevet américain US 3 398 881 décrit un agencement alternatif où les tubes sont montés dans des trous prévus dans une virole intérieure et une virole extérieure.

L'invention vise à un agencement perfectionné facilitant le montage, notamment en éliminant le sertissage.

Plus précisément, l'invention concerne un compresseur à prélèvement d'air centripète, du type comportant plusieurs tubes d'orientation radiale, régulièrement répartis circonférentiellement, lesdits tubes étant installés entre deux viroles coaxiales du rotor dudit compresseur, respectivement une virole extérieure et une virole intérieure, l'espace à l'extérieur de ladite virole extérieure communiquant avec la veine dudit compresseur, caractérisé en ce qu'une extrémité de chaque tube est engagée dans un trou de ladite virole extérieure, en ce que chaque tube est engagé dans un trou de ladite virole intérieure et en ce que des moyens de verrouillage sont définis entre un tel tube et ladite virole intérieure.

Selon un mode de réalisation préféré, les moyens de verrouillage comportent :
- une collerette solidaire de chaque tube, munie d'un méplat,
- une rainure annulaire à ouverture latérale, définie à la face interne de ladite virole intérieure et une butée annulaire amovible faisant saillie de ladite face interne, parallèlement à ladite rainure annulaire.

Ladite collerette est engagée dans ladite rainure et son méplat est en regard de ladite butée annulaire.

La butée annulaire précitée peut être un jonc d'arrêt monté dans une gorge de la virole intérieure.

De plus, pour faciliter le montage, il est avantageux que chaque tube comporte une noix à section circulaire et en ce que chaque trou pratiqué dans ladite virole intérieure ait un diamètre correspondant à celui de ladite noix. Après montage, la noix est engagée dans ce trou.

Dans ce cas, le montage est encore facilité si on prévoit une fente entre le bord de la virole intérieure et chaque trou, ladite fente ayant une largeur suffisante pour permettre d'engager ledit tube dans le trou.

L'invention concerne également un turboréacteur pour avion, caractérisé en ce qu'il comprend un compresseur à prélèvement d'air centripète du type défini précédemment.

L'invention sera mieux comprise et d'autres avantages de celle-ci apparaîtront plus clairement à la lumière de la description qui va suivre donnée uniquement à titre d'exemple et faite en référence aux dessins annexés dans lesquels :
- la figure 1 est une vue partielle en coupe d'un compresseur équipé du perfectionnement conforme à l'invention ;
- la figure 2 est une vue de détail en perspective montrant plus en détail le montage de l'un des tubes ;
- la figure 3 est une vue de détail selon une coupe III-III de la figure 2 ; et
- la figure 4 est une vue schématique partielle selon une coupe radiale illustrant une variante.

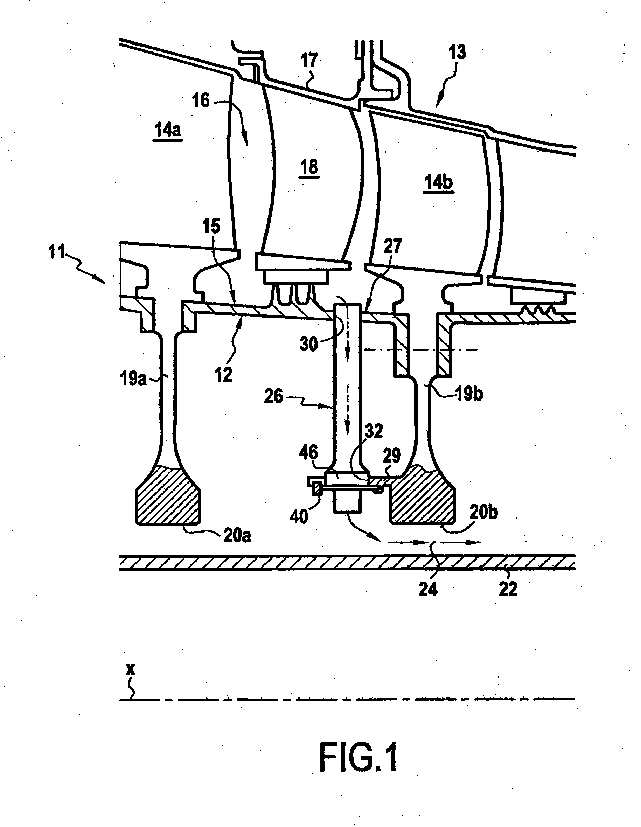

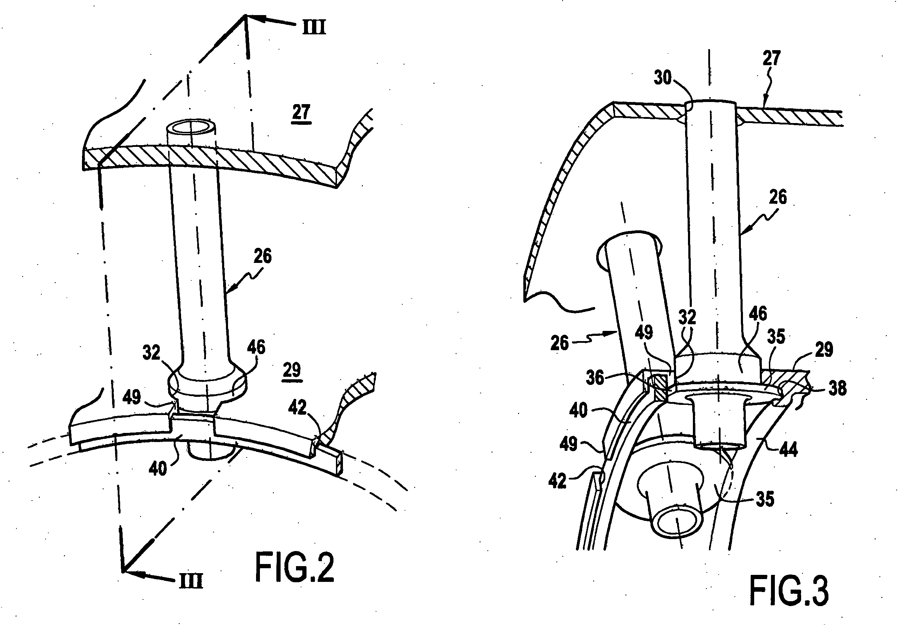

En se référant plus particulièrement aux figures 1 à 3, on a représenté le moyeu 12 d'un rotor 11 du compresseur haute pression 13 d'un turboréacteur. On sait que ce moyeu 12 porte des aubes 14a, 14b mobiles en rotation qui s'étendent radialement à l'extérieur de sa paroi externe 15, une veine d'air annulaire 16 étant définie entre cette paroi et un carter 17. Des aubes fixes 18 sont agencées entre les aubes mobiles, axialement. Le moyeu comprend un assemblage de disques 19a, 19b s'étendant radialement vers l'intérieur à partir de la paroi externe du moyeu 12 délimitant la veine d'air 16. Chaque disque présente un alésage central 20a, 20b au travers duquel s'étend un arbre 22. Pour les besoins de refroidissement de certains éléments, il est nécessaire de prélever de l'air dans la veine pour le réinjecter dans l'espace 24 délimité par les alésages des disques et l'arbre 22. Ce prélèvement est opéré par une série de tubes de prélèvement 26, d'orientation radiale, régulièrement répartis circonférentiellement. On prévoit dans l'exemple douze tubes de prélèvement 26 installés entre deux viroles coaxiales du rotor dudit compresseur, respectivement une virole extérieure 27 et une virole intérieure 29. L'espace à l'extérieur de la virole extérieure 27 communique avec la veine 16 du compresseur. Dans l'exemple représenté ladite virole extérieure 27 fait en fait partie de la paroi externe 15 du moyeu délimitant la veine d'air. La virole intérieure 29, quant à elle, est définie latéralement et coaxialement à l'axe de rotation x sur le côté de l'un des disques, ici le disque 19b.

>

Selon une caractéristique importante de l'invention, une extrémité de chaque tube (l'extrémité dirigée vers l'extérieur) est engagée dans un trou 30 de ladite virole extérieure 27. Par ailleurs, chaque tube est engagé dans un trou 32 de ladite virole intérieure 29. Enfin, des moyens de verrouillage sont définis entre l'ensemble des tubes 26 d'une part et la virole intérieure 29 d'autre part, les moyens de verrouillage se répartissent comme suit :
- sur chaque tube 26, une collerette plate 35 est fixée à l'extérieur du tube à une distance radiale correspondant à la position de la virole intérieure. Cette collerette est munie d'un méplat 36.
- sur ladite virole intérieure 29, une rainure annulaire 38 à ouverture latérale est définie à la face interne de ladite virole intérieure tandis qu'une butée annulaire amovible 40 fait saillie de cette face interne, parallèlement à ladite rainure annulaire 38. Dans l'exemple représenté, ladite butée annulaire 40 est un jonc d'arrêt monté dans une gorge 42 de ladite virole intérieure 29.

Dans l'exemple représenté, ladite rainure annulaire 38 à ouverture latérale est définie dans une nervure annulaire 44 faisant saillie de la face interne de ladite virole intérieure.

Lorsque le tube 26 est en position et est verrouillé à ladite virole intérieure, la collerette 35 est engagée dans la rainure 38 et son méplat 36 est sensiblement en contact avec ladite butée annulaire 40.

De plus, avantageusement, chaque tube comporte une noix 45 à section circulaire élargie, adjacente à la collerette 35. Le trou 32 pratiqué dans ladite virole intérieure 29 a un diamètre correspondant à celui de ladite noix 46. Bien entendu, lorsque le tube est en position, la noix 46 se trouve placée dans ce trou 32. Une fente 49 est pratiquée entre le bord de la virole intérieure 29 et chaque trou 32. Une telle fente a une largeur suffisante pour permettre d'engager le tube 26 dans le trou, cette largeur étant bien entendu inférieure au diamètre de la noix.

Dans l'exemple des figures 1 à 3, l'extrémité extérieure du tube 26 est simplement engagée à coulissement dans le trou 30 correspondant, de la virole extérieure 27.

Il résulte de la description qui précède que le montage des tubes peut se faire d'une façon extrêmement simple. La butée 40 étant enlevée, l'opérateur peut présenter chaque tube 26 en regard d'une fente 49 correspondante de la virole intérieure 29, engager le tube dans cette fente, la noix 46 étant provisoirement située à une distance radiale inférieure à celle où se situe ladite virole intérieure. Puis, une fois le tube 26 dans le trou 32 de la virole intérieure, l'opérateur le déplace radialement vers l'extérieur pour engager son extrémité extérieure dans le trou 30 de la virole extérieure 27. Pendant cette opération, la noix 46 s'engage dans le trou de la virole intérieure, l'opérateur ayant pris soin de placer le méplat 36 en regard de la rainure annulaire à ouverture latérale 38. Lorsque la collerette 35 arrive au contact de la face interne de la virole intérieure, l'opérateur fait tourner le tube de 180° jusqu'à ce que le méplat 36 se retrouve positionné en regard de l'emplacement du jonc d'arrêt. Dès lors, le tube est maintenu en position par l'engagement de sa collerette 35 dans la rainure 38. Les douze tubes sont montés de cette façon. Enfin, il suffit dlnstaller le jonc d'arrêt (butée 40) dans sa gorge 42 pour immobiliser définitivement tous les tubes.

Dans ce mode de réalisation, les efforts dus à la force centrifuge s'exercent entre les collerettes 35 et la virole intérieure 29.

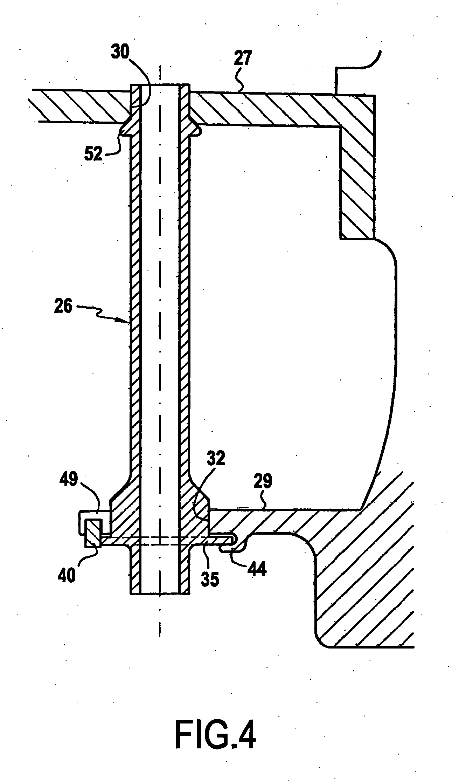

Dans le mode de réalisation de la figure 4 où les éléments de structure analogues portent les mêmes références numériques et ne seront pas décrits à nouveau, l'extrémité extérieure de chaque tube 26 qui est engagée dans un trou 30 correspondant à la virole extérieure 27 comporte un épaulement 52, ici de forme conique, en appui contre une surface correspondante de la face interne de ladite virole extérieure 27. Dans ce mode de réalisation, la force centrifuge qui s'exerce sur le tube de prélèvement 26 se traduit par un appui entre l'épaulement 52 et la face interne de ladite virole extérieure 27. La collerette 35 n'a plus qu'une fonction de verrouillage au montage.

## Revendications

1. Compresseur à prélèvement d'air centripète, du type comportant plusieurs tubes d'orientation radiale, régulièrement répartis circonférentiellement, lesdits tubes (26) étant installés entre deux viroles coaxiales du rotor dudit compresseur, respectivement une virole extérieure (27) et une virole intérieure (29), l'espace à l'extérieur de ladite virole extérieure communiquant avec la veine dudit compresseur, une extrémité de chaque tube (26) étant engagée dans un trou (30) de ladite virole extérieure, chaque tube étant engagé dans un trou (32) de ladite virole intérieure, **caractérisé en ce que** des moyens de verrouillage, définis entre un tel tube et ladite virole intérieure, comprennent :
- une collerette (35) solidaire de chaque tube, munie d'un méplat (36),
- une rainure annulaire à ouverture latérale (38), définie à la face interne de ladite virole intérieure et une butée annulaire amovible (40) faisant saillie de ladite face interne, parallèlement à ladite rainure annulaire,
- ladite collerette (35) étant engagée dans ladite rainure et son méplat (36) étant en regard de ladite butée annulaire.

2. Compresseur selon la revendication 1, **caractérisé en ce que** ladite butée annulaire (40) est un jonc d'arrêt monté dans une gorge (42) de ladite virole intérieure.

3. Compresseur selon la revendication 1 ou 2, **caractérisé en ce que** ladite rainure annulaire à ouverture latérale est définie dans une nervure annulaire (44) faisant saillie de la face interne de ladite virole intérieure.

4. Compresseur selon l'une des revendications précédentes, **caractérisé en ce que** chaque tube comporte une noix (46) à section circulaire élargie et **en ce que** chaque trou (32) pratiqué dans ladite virole intérieure a un diamètre correspondant à celui de ladite noix, ledit trou recevant ladite noix.

5. Compresseur selon la revendication 4, **caractérisé en ce qu'**une fente (49) est pratiquée entre le bord de ladite virole intérieure (29) et chaque trou (32), et **en ce que** cette fente a une largeur suffisante pour permettre d'engager ledit tube dans ledit trou.

6. Compresseur selon l'une des revendications précédentes, **caractérisé en ce que** l'extrémité extérieure dudit tube est engagée à coulissement dans le trou (30) de ladite virole extérieure.

7. Compresseur selon l'une des revendications précédentes, **caractérisé en ce que** l'extrémité extérieure de chaque tube, engagée dans un trou (30) de ladite virole extérieure comporte un épaulement (52) en appui contre la face interne de cette virole extérieure (27).

8. Compresseur selon l'une des revendications précédentes, **caractérisé en ce que** ladite virole extérieure (27) fait partie d'une paroi délimitant la veine d'air.

9. Turboréacteur d'avion, **caractérisé en ce qu'**il est muni d'un compresseur selon l'une quelconque des revendications 1 à 8.

## Patentansprüche

1. Verdichter mit zentripetaler Luftentnahme, vom Typ umfassend mehrere Rohre mit radialer Ausrichtung, die in Umfangsrichtung gleichmäßig verteilt sind, wobei die Rohre (26) zwischen zwei koaxialen Ringen des Rotors des Verdichters, einem äußeren Ring (27) bzw. einem inneren Ring (29), angebracht sind, wobei der Raum außerhalb des äußeren Rings mit dem Kanal des Verdichters in Verbindung steht, wobei ein Ende eines jedes Rohrs (26) in ein Loch (30) des äußeren Rings eingesteckt ist, wobei jedes Rohr in ein Loch (32) des inneren Rings eingesteckt ist, **dadurch gekennzeichnet, dass** Verrieglungsmittel, die zwischen einem solchen Rohr und dem inneren Ring definiert sind, umfassen:
- einen mit jedem Rohr fest verbundenen Kragen (35), der mit einer Abflachung (36) versehen ist,
- eine Ringnut mit seitlicher Öffnung (38), die an der Innenseite des inneren Rings definiert ist, und einen lösbaren ringförmigen Anschlag (40), der von der Innenseite parallel zu der Ringnut vorspringt,
- wobei der Kragen (35) in die Nut eingesteckt ist und seine Abflachung (36) dem ringförmigen Anschlag gegenüberliegt.

2. Verdichter nach Anspruch 1, **dadurch gekennzeichnet, dass** der ringförmige Anschlag (40) ein Sicherungsring ist, der in einer Rille (42) des inneren Rings angebracht ist.

3. Verdichter nach Anspruch 1 oder 2, **dadurch gekennzeichnet, dass** die Ringnut mit seitlicher Öffnung in einer ringförmigen Rippe (44), welche von der Innenseite des inneren Rings vorspringt, definiert ist.

4. Verdichter nach einem der vorhergehenden Ansprüche, **dadurch gekennzeichnet, dass** jedes Rohr einen Kopf (46) mit erweitertem kreisförmigem Querschnitt umfasst und dass jedes in dem inneren Ring ausgebildete Loch (32) einen Durchmesser aufweist, der demjenigen des Kopfes entspricht, wobei das Loch den Kopf aufnimmt.

5. Verdichter nach Anspruch 4, **dadurch gekennzeichnet, dass** ein Schlitz (49) zwischen dem Rand des inneren Rings (29) und jedem Loch (32) ausgebildet ist und dass dieser Schlitz eine ausreichende Breite aufweist, um das Einstecken des Rohrs in das Loch zu ermöglichen.

6. Verdichter nach einem der vorhergehenden Ansprüche, **dadurch gekennzeichnet, dass** das äußere Ende des Rohrs in das Loch (30) des äußeren Rings verschieblich eingesteckt ist.

7. Verdichter nach einem der vorhergehenden Ansprüche, **dadurch gekennzeichnet, dass** das äußere Ende eines jeden Rohrs, das in ein Loch (30) des äußeren Rings eingesteckt ist, eine Schulter (52) umfasst, die an der Innenseite dieses äußeren Rings (27) in Anlage ist.

8. Verdichter nach einem der vorhergehenden Ansprüche, **dadurch gekennzeichnet, dass** der äußere Ring (27) zu einer den Luftkanal begrenzenden Wand gehört.

9. Turbostrahltriebwerk eines Flugzeugs, **dadurch gekennzeichnet, dass** es mit einem Verdichter nach einem der Ansprüche 1 bis 8 ausgestattet ist.

## Claims

1. A compressor with centripetal air offtake, of the type comprising several radially oriented pipes, regularly distributed circumferentially, said pipes (26) being installed between two coaxial collars of the rotor of said compressor, respectively an outer collar (27) and an inner collar (29), the space outside said outer collar communicating with the stream of said compressor, one end of each pipe (26) being fitted in a hole (30) in said outer collar, each pipe being fitted in a hole (32) in said inner collar, **characterized in that** locking means, defined between such a pipe and said inner collar, comprise:
- a flange (35) fixed to each pipe, provided with a flat section (36);
- an annular slot with lateral opening (38), defined on the internal face of said inner collar and a removable annular limit stop (40) projecting from said internal face, parallel to said annular slot;
- said flange (35) being fitted in said slot and its flat section (36) being opposite said annular limit stop.

2. The compressor as claimed in claim 1, **characterized in that** said annular limit stop (40) is a retaining ring mounted in a groove (42) in said inner collar.

3. The compressor as claimed in claim 1 or 2, **characterized in that** said annular slot with lateral opening is defined in an annular rib (44) projecting from the internal face of said inner collar.

4. The compressor as claimed in any one of the preceding claims, **characterized in that** each pipe comprises a boss (46) with widened circular cross-section and wherein each hole (32) made in said inner collar has a diameter corresponding to that of said boss, said hole accommodating said boss.

5. The compressor as claimed in claim 4, **characterized in that** a channel (49) is made between the edge of said inner collar (29) and each hole (32), and wherein this channel has a width sufficient to make it possible to fit said pipe into said hole.

6. The compressor as claimed in any one of the preceding claims, **characterized in that** the outer end of said pipe is fitted by sliding into the hole (30) in said outer collar.

7. The compressor as claimed in any one of the preceding claims, **characterized in that** the outer end of each pipe, fitted in a hole (30) of said outer collar, comprises a shoulder (52) resting against the internal face of this outer collar (27).

8. The compressor as claimed in any one of the preceding claims, **characterized in that** said outer collar (27) forms part of a wall delimiting the air stream.

9. An aircraft turbojet engine, this engine being provided with a compressor as claimed in any one of claims 1 to 8.
